# DEMANDE DE BREVET EUROPEEN

(11) **EP 3 479 914 A1**
(43) Date de publication de la demande: **08.05.2019**
(21) Numéro de dépôt: 18204146.7
(22) Date de dépôt: 02.11.2018
(51) Int. Cl.: B09B 3/00, B01D 29/56, B08B 3/02

(54) **DISPOSITIF ET PROCÉDÉ DE FILTRATION D'UN EFFLUENT LIQUIDE AMIANTÉ**

(30) Priorité: 06.11.2017 FR 1760384
(71) Demandeur: Spartacus System, 26750 Chatillon Saint Jean (FR)
(72) Inventeur: Agostinelli, Siegfried, 26750 Chatillon Saint Jean (FR)
(74) Mandataire: Le Goaller, Christophe

(57) **Abrégé**

L'invention est un dispositif de filtration (1), destiné à recueillir un effluent liquide (5) comprenant de l'amiante, le dispositif comportant une admission (6) pour recevoir l'effluent non filtré ainsi que différents filtres (10, 20, 30) successivement disposés en série, de façon à filtrer l'effluent, le dispositif étant disposé sur un châssis nomade (2), reposant sur des roues (3), le dispositif étant caractérisé en ce qu'il comporte:
- un premier filtre (10), de type filtre à bande filtrante défilante (11), disposé en aval de l'admission, la bande filtrante défilante étant configurée pour être déplacée par un moteur (12), relativement à l'admission (6), le premier filtre effectuant une filtration de l'effluent selon une première granulométrie ;
- un deuxième filtre (20), de type à cartouche, disposé en aval du premier filtre (10), le deuxième filtre effectuant une filtration de l'effluent filtré par le premier filtre, selon une deuxième granulométrie, inférieure à la première granulométrie ;
- un troisième filtre (30), de type à cartouche, disposé en aval du deuxième filtre (20), le troisième filtre effectuant une filtration de l'effluent filtré par le deuxième filtre, selon une troisième granulométrie ;
- un conduit de rejet (40), disposé en aval du troisième filtre (30), pour rejeter l'effluent filtré par le troisième filtre.

## Description

### DOMAINE TECHNIQUE

Le domaine technique de l'invention est le traitement d'effluents liquides, en particulier des effluents amiantés provenant de toitures.

### ART ANTERIEUR

La question de la maintenance de toitures amiantées concerne de nombreux bâtiments, généralement anciens. Ces toitures peuvent notamment être constituées de fibrociment. Leur dégradation, du fait de leur vieillissement, s'accompagne d'un risque de dispersion de fibres d'amiante à l'intérieur des bâtiments ainsi que dans l'environnement de ces derniers. Aussi, lorsque des fissures apparaissent dans ces toitures, il est nécessaire de leur appliquer un confinement, par exemple sous la forme d'un revêtement, par exemple une peinture ou un enrobé, de façon à fixer l'amiante et éviter sa dispersion, tout en restaurant l'intégrité et l'étanchéité de la toiture.

Cependant, l'état des toitures impose qu'un nettoyage préliminaire soit réalisé, de façon à éliminer des résidus solides et labiles présents à la surface de toiture. L'objectif est que l'état de surface de la toiture soit compatible avec l'application d'une couche de revêtement, de telle sorte que l'accroche de cette dernière sur la toiture soit optimale.

Le document GB2398481 décrit un procédé pour nettoyer une toiture contenant de l'amiante, à l'aide d'un chariot se déplaçant le long des toitures et projetant de l'eau sous pression contre la toiture. L'eau s'écoulant de la toiture est ensuite recueillie, avant d'être filtrée par un dispositif de filtration nomade. L'eau s'écoulant de la toiture comporte en effet des fibres d'amiante, ainsi que des particules de mousse, de lichen ou de fibrociment. L'étape de filtration est particulièrement importante, car elle permet de concentrer et de collecter les fibres d'amiante, et autres particules, afin de pouvoir les conditionner et les adresser vers des exutoires dédiés. La filtration permet également de filtrer l'eau, de façon à rejeter une eau aussi propre que possible. Un filtre destiné à la filtration d'effluents amiantés est également décrit dans WO91/04805.

Le document WO2014/135819 décrit un dispositif destiné à filtrer un effluent amianté, comportant une presse filtreuse, associée à deux étages de filtration disposés en série. La presse filtreuse comporte une toile filtrante qui demeure fixe pendant la filtration.

L'inventeur a constaté que les performances, en termes de filtration, d'un dispositif de filtration nomade sont particulièrement importantes. En effet, si l'on se fixe pour objectif de rejeter l'eau filtrée dans un égout, il faut respecter des exigences sanitaires strictes, relatives à la quantité d'amiante résiduelle dans l'eau filtrée. De plus, il est nécessaire de disposer d'un filtre aussi automatisé que possible, de façon à permettre une filtration d'un volume important d'eau, en limitant les risques de colmatage.

L'inventeur a conçu un dispositif de filtration de conception simple, compact et aisément utilisable sur le terrain, pour effectuer une filtration d'un effluent liquide comportant de l'amiante. Le dispositif permet une filtration suffisante de façon à respecter les exigences de rejet, dans des égouts standards, de l'effluent filtré. Il permet le traitement d'une grande quantité d'eau contaminée, en minimisant les risques de colmatage.

### EXPOSE DE L'INVENTION

Un premier objet de l'invention est un dispositif de filtration, destiné à recueillir un effluent liquide comprenant de l'amiante, le dispositif comportant une admission pour recevoir l'effluent ainsi que différents filtres successivement disposés en série, de façon à filtrer l'effluent, le dispositif étant disposé sur un châssis nomade, reposant sur des roues, le dispositif étant caractérisé en ce qu'il comporte:
- un premier filtre, de type filtre à bande filtrante défilante, disposé en aval de l'admission, la bande filtrante défilante étant apte à être déplacée, relativement à l'admission, par un moteur, le premier filtre effectuant une filtration de l'effluent selon une première granulométrie ;
- un deuxième filtre, de type à cartouche, disposé en aval du premier filtre, le deuxième filtre effectuant une filtration de l'effluent filtré par le premier filtre, selon une deuxième granulométrie, inférieure à la première granulométrie ;
- un troisième filtre, de type à cartouche, disposé en aval du deuxième filtre, le troisième filtre effectuant une filtration de l'effluent filtré par le deuxième filtre, selon une troisième granulométrie ;
- un conduit de rejet, disposé en aval du troisième filtre, pour rejeter l'effluent filtré par le troisième filtre.

Les termes amont ou aval s'entendent selon la direction d'écoulement de l'effluent dans le dispositif de filtration, de l'admission vers le conduit de rejet. Par granulométrie, on entend une dimension minimale d'une particule retenue par le filtre.

L'effluent liquide peut notamment être de l'eau, ou une solution aqueuse, comportant de l'amiante
De préférence,
- la granulométrie du premier filtre est comprise entre 30 µm et 100 µm, et avantageusement entre 35 µm et 50 µm ;
- et/ou la granulométrie du deuxième filtre est comprise entre 15 et 30 µm et avantageusement comprise entre 20 et 25 µm;
- la granulométrie du troisième filtre est comprise entre 3 et 15 µm et avantageusement comprise entre 3 et 8 µm.

La bande filtrante défilante peut être souple et disposée sous la forme d'un rouleau, dont une partie est déroulée de façon à faire face à l'admission. Le moteur agit sur le rouleau, de façon à renouveler la partie de bande située à l'aplomb de l'admission. La bande défilante peut être déroulée séquentiellement ou en continu. Un capteur de niveau, destiné à détecter une élévation d'un niveau de l'effluent sur la bande, peut déclencher un actionnement du moteur.

Le dispositif peut comporter une cuve, dite cuve tampon, disposée entre le premier filtre et le deuxième filtre, la cuve étant agencée de telle sorte que l'effluent s'écoule, par gravité, du premier filtre, vers la cuve. La cuve présente de préférence un fond incliné, ce qui facilite la vidange.

Le dispositif peut comporter une pompe, pour diriger l'effluent présent dans la cuve tampon vers le deuxième filtre. La cuve peut alors comporter un détecteur de niveau de l'effluent dans la cuve tampon, de telle sorte que la pompe est activée lorsque la quantité d'effluent dans la cuve dépasse une quantité prédéterminée.

Le dispositif peut comporter un compresseur d'air, relié au deuxième filtre et au troisième filtre, le compresseur d'air étant configuré pour injecter de l'air dans le deuxième filtre et/ou le troisième filtre.

Le dispositif peut comporter un microcontrôleur, de façon à piloter le moteur déplaçant la bande défilante, et/ou l'activation de la pompe, et/ou l'activation du compresseur d'air. Le microcontrôleur peut activer des alarmes en cas de dysfonctionnement, notamment en cas de colmatage du deuxième filtre ou du troisième filtre.

Un deuxième objet de l'invention est un procédé de filtration d'un effluent amianté, le procédé comportant une filtration de l'effluent par un dispositif selon le premier objet de l'invention, de façon à piéger des fibres d'amiante, ou autres résidus, dans chaque filtre.

L'effluent amianté peut être issu d'une toiture et s'écouler, par écoulement gravitaire, à partir de cette dernière. L'effluent filtré par le dispositif peut respecter les contraintes pour pouvoir être rejeté dans un égout domestique.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

La figure 1 schématise les principaux composants du dispositif de filtration.
Les figures 2 et 3 sont des vues en trois dimensions d'un exemple de dispositif de filtration.

### EXPOSE DE MODES DE REALISATION PARTICULIERS

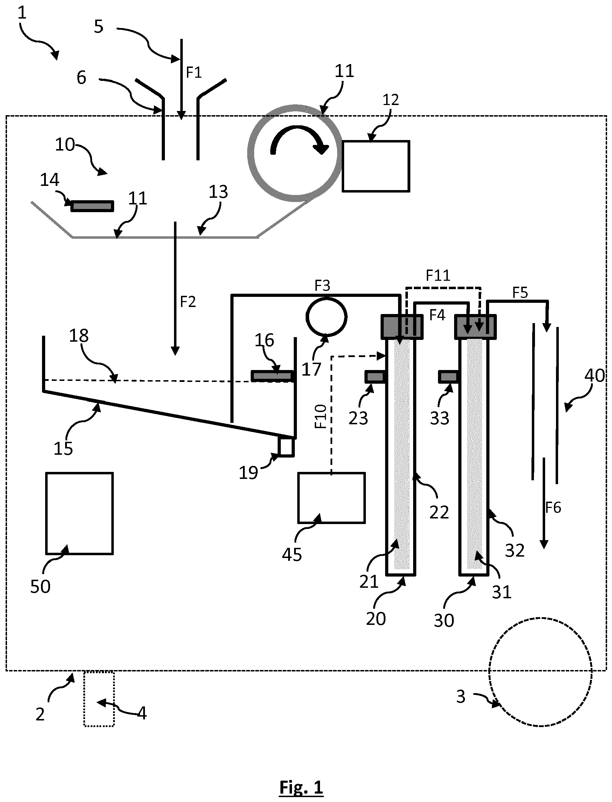

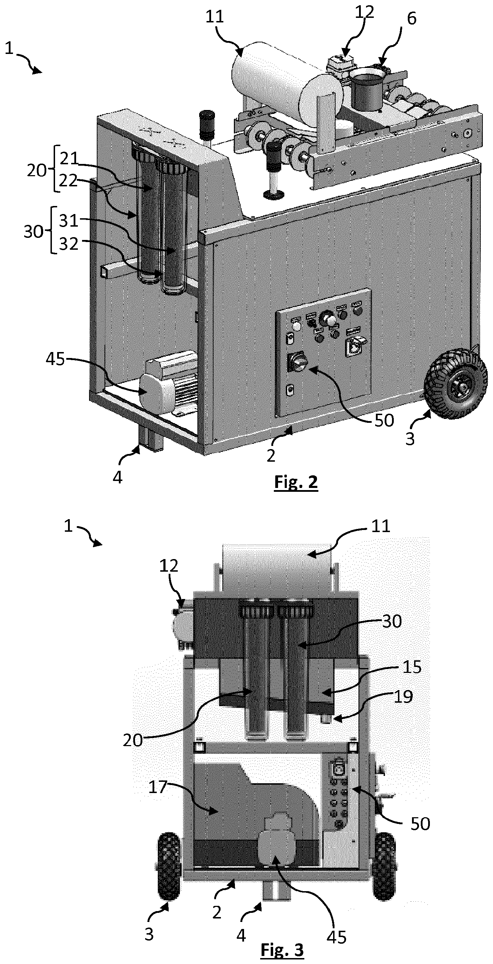

La figure 1 représente un schéma d'un dispositif de filtration nomade 1 selon l'invention. Ce schéma est complété par des vues en trois dimensions des figures 2 et 3. Le dispositif de filtration présente un châssis 2 mobile sur des roues ou des roulettes 3. Le châssis peut comporter un pied fixe 4, en complément ou en alternative d'une roue. Le pied fixe 4 permet de stabiliser le châssis 2 lorsque le dispositif de filtration 1 fonctionne. Le châssis délimite un volume dans lequel sont disposés différents filtres, dont la combinaison assure une filtration optimale d'un effluent amianté, tel de l'eau amiantée s'écoulant d'une toiture.

Le dispositif de filtration comporte un conduit d'admission 6, de diamètre 100 mm, par lequel pénètre l'effluent non filtré 5. De préférence, l'effluent non filtré 5 s'écoule par gravité dans le conduit d'admission 6 (flèche F1). Le premier filtre 10 du dispositif est un filtre à bande filtrante défilante, selon lequel une bande filtrante 11, de préférence souple, est déplacée en continu ou de façon séquentielle. Dans cet exemple, la bande filtrante 11 est stockée sous la forme d'un rouleau. L'effluent liquide 5 s'écoule à travers une partie déroulée de la bande filtrante 11, tandis que des fibres d'amiante, ou autres déchets, sont retenus par la bande et stagnent sur cette dernière. Un moteur 12 agit sur la bande filtrante 11, pour la dérouler de façon continue ou séquentielle, lorsque cette dernière est colmatée.

La séquence d'avancement de la bande filtrante 11 relativement au conduit d'admission 6 peut être programmée. De façon alternative, comme représenté sur la figure 1, la bande filtrante 11 forme un creux 13. Lorsque la bande filtrante se colmate, l'eau présente dans le creux monte et dépasse un certain seuil. Un capteur 14, par exemple un capteur de niveau, déclenche le moteur 12 pour dérouler la bande filtrante, de façon à renouveler la partie de la bande filtrante sur laquelle se déverse l'effluent 5. La détection d'un niveau d'eau élevé sur la bande filtrante défilante correspond à un colmatage de la bande filtrante, justifiant son renouvellement.

Dans l'exemple représenté, la bande filtrante est un textile non tissé commercialisé par la société Filtreri, en polyester, et/ou polypropylène, et/ou viscose. Le seuil de filtration (ou granulométrie) est compris entre 35 µm et 40 µm.

La détermination de la granulométrie de la bande filtrante a fait l'objet d'une optimisation. En effet, lorsque la granulométrie est trop élevée, par exemple supérieure à 100 µm, un nombre trop important de fibres d'amiante passe à travers la bande. Cela contribue à colmater rapidement les filtres disposés en aval de la bande filtrante, et décrits ci-après. A l'inverse, lorsque la granulométrie est trop faible, par exemple en dessous de 30 µm, la bande filtrante 11 se colmate trop rapidement, ce qui nuit à l'efficacité de la filtration et réduit le débit d'effluent filtré. Cela entraîne également une consommation excessive de bande filtrante. L'inventeur a estimé qu'il était préférable que la granulométrie de la bande filtrante soit comprise entre 30 µm et 100 µm, et de préférence entre 30 µm et 50 µm. Une granulométrie comprise entre 35 µm et 40 µm est considérée comme optimale.

L'effluent filtré par le premier filtre 10 se déverse ensuite, par gravité, dans une cuve 15 (flèche F2), dite cuve tampon. La cuve tampon 15 fait office de stockage tampon entre le premier filtre 10 et un deuxième filtre 20 décrit par la suite. Lorsque la quantité d'effluents dans la cuve tampon 15 dépasse une certaine quantité, un détecteur de niveau 16 active une pompe 17, de façon à diriger l'effluent vers le deuxième filtre 20 (flèche F3). Le détecteur de niveau 16 permet de définir un niveau maximum 18 d'effluent dans la cuve tampon, au-delà duquel l'effluent est évacué par la pompe 17. La cuve tampon 15 présente un fond incliné par rapport au plan formé par les roues 3 et l'éventuel pied 4 du châssis. L'inclinaison permet de définir un point bas de la cuve tampon 15, au niveau duquel la cuve peut comporter un orifice de vidange 19. Une telle disposition facilite la vidange de la cuve.

Le deuxième filtre 20 est un filtre de type filtre à cartouche, refermé par un joint torique. Selon un tel filtre, une membrane filtrante 21 cylindrique est disposée dans une verrine 22 formant un tube. L'effluent pénètre dans la partie périphérique du tube, sous l'action de la pompe. Il traverse la membrane filtrante avant de sortir du tube, au centre de ce dernier. Il est préférable que la membrane filtrante 21 du deuxième filtre 20 présente une granulométrie comprise entre 15 µm et 30 µm. Une granulométrie comprise entre 20 et 30 µm, par exemple de 25 µm, est considérée comme optimale.

Sous l'effet de la pompe 17, l'effluent sortant du deuxième filtre 20 pénètre dans un troisième filtre 30 (flèche F4). Le troisième filtre 30 est un filtre de type à cartouche, dont la structure est similaire à celle du deuxième filtre 20 : il comporte une membrane filtrante 31 confinée dans une verrine tubulaire 32. Il est préférable que la membrane filtrante 31 du deuxième filtre 30 présente une granulométrie comprise entre 3 µm et 15 µm. Une granulométrie comprise entre 3 et 8 µm, par exemple de 5 µm, est considérée comme optimale.

L'effluent issu du troisième filtre 30 est dirigé, sous l'action de la pompe 17, vers un conduit 40 d'évacuation de l'effluent filtré par le dispositif de filtration (flèche F5), pour être rejeté à l'extérieur du dispositif, en particulier dans un égout (flèche F6).

Le dispositif de filtration comporte un microcontrôleur 50, permettant la gestion du moteur 12, agissant pour translater et dérouler la bande 11 du premier filtre à bande 10 relativement au conduit d'admission 6. Le microcontrôleur peut par exemple être relié au capteur de niveau 14, de façon à activer le moteur lorsque le capteur de niveau 14 détecte que la bande filtrante 11 est colmatée. L'activation du moteur 12 permet un renouvellement de la bande filtrante 11.

Le microcontrôleur 50 peut également gérer la pompe 17, permettant de diriger l'effluent à travers le deuxième filtre 20 et le troisième filtre 30. Le microcontrôleur peut par exemple être relié au détecteur de niveau 16, de façon à activer la pompe 17 lorsque le niveau d'eau dans la cuve tampon 15 dépasse le niveau maximum 18. L'activation de la pompe 17 permet de forcer l'effluent à travers le deuxième filtre 20 et le troisième filtre 30, puis de diriger l'effluent filtré vers le conduit d'évacuation 40.

Le dispositif de filtration peut contenir un compresseur d'air 45, destiné à alimenter le deuxième filtre 20 et le troisième filtre 30 en air comprimé. Le compresseur d'air 45 permet de nettoyer les filtres après utilisation, ou lorsque la pression d'eau dans un de ces filtres dépasse un seuil. Pour cela, des capteurs de pression 23, 33 sont respectivement disposés dans le deuxième filtre 20 et le troisième filtre 30. Lorsque la pression à l'intérieur des filtres dépasse un seuil de pression, par exemple 8 bars, la pompe 17 est désactivée par le microcontrôleur 50. Le compresseur d'air 45 est activé, de façon à diriger de l'air comprimé dans les filtres 20 et 30. L'air comprimé permet de chasser l'eau et d'assécher les filtres avant leur éventuel remplacement. Cela est représenté, sur la figure 1, par les flèches en pointillés F10 et F11.

Le dispositif de filtration comporte des témoins lumineux permettant de confirmer le bon fonctionnement, ou la survenue d'un colmatage dans le deuxième filtre 20 ou dans le troisième filtre 30, ou un autre dysfonctionnement. Les témoins lumineux peuvent être commandés par le microcontrôleur 50. Ils peuvent être complétés ou remplacés par une alarme sonore, en particulier en cas de colmatage du deuxième filtre 20 ou du troisième filtre 30. Cela permet en particulier d'éviter que la cuve tampon 15 déborde.

Des essais expérimentaux ont été réalisés, au cours desquels on a analysé la qualité d'une eau filtrée par le dispositif de filtration. La qualité s'est révélée compatible avec les exigences applicables s'appliquant au rejet des eaux usées dans des égouts domestiques. Le conduit 40 peut donc être disposé en amont d'un égout.

Les parties de bande filtrante ayant collecté des particules d'amiante, ainsi que les membranes 21 et 31 des deuxième et troisième filtres peuvent être conditionnés et évacués selon une filière spécifique relative aux déchets amiantés.

De préférence, le dispositif de filtration comporte uniquement les trois filtres décrits ci-dessus, les filtres étant montés sur le châssis.

L'invention pourra s'appliquer au traitement d'effluents, en particulier des effluents amiantés, en particulier lors d'interventions menées à l'air libre, l'amiante étant entraînée par de l'eau. Elle peut être mise en oeuvre lors d'opérations de rénovation ou de traitement de parois ou de toitures amiantées.

## Revendications

1. Dispositif de filtration (1), destiné à recueillir un effluent (5) liquide comprenant de l'amiante, le dispositif comportant une admission (6) pour recevoir l'effluent ainsi que différents filtres (10, 20, 30) successivement disposés en série, de façon à filtrer l'effluent, le dispositif étant disposé sur un châssis nomade (2), reposant sur des roues (3), le dispositif étant **caractérisé en ce qu'**il comporte:
- un premier filtre (10), de type filtre à bande filtrante défilante (11), disposé en aval de l'admission (6), la bande filtrante défilante étant configurée pour être déplacée par un moteur (12), relativement à l'admission (6), le premier filtre effectuant une filtration de l'effluent selon une première granulométrie ;
- un deuxième filtre (20), de type à cartouche, disposé en aval du premier filtre (10), le deuxième filtre effectuant une filtration de l'effluent filtré par le premier filtre, selon une deuxième granulométrie, inférieure à la première granulométrie ;
- un troisième filtre (30), de type à cartouche, disposé en aval du deuxième filtre (20), le troisième filtre effectuant une filtration de l'effluent filtré par le deuxième filtre, selon une troisième granulométrie ;
- un conduit de rejet (40), disposé en aval du troisième filtre (30), pour rejeter l'effluent filtré par le troisième filtre.

2. Dispositif selon la revendication 1, dans lequel :
- la granulométrie du premier filtre (10) est comprise entre 30 µm et 100 µm ;
- la granulométrie du deuxième filtre (20) est comprise entre 15 et 30 µm ;
- la granulométrie du troisième filtre (30) est comprise entre 3 et 15 µm.

3. Dispositif selon la revendication 2, dans lequel :
- la granulométrie du premier filtre est comprise entre 35 µm et 50 µm ;
- la granulométrie du deuxième filtre est comprise entre 20 et 25 µm ;
- la granulométrie du troisième filtre est comprise entre 3 et 8 µm.

4. Dispositif selon l'une quelconque des revendications précédentes, comportant une cuve, dite cuve tampon (15) disposée entre le premier filtre et le deuxième filtre, la cuve (15) étant agencée de telle sorte que l'effluent s'écoule, par gravité, du premier filtre (10), vers la cuve.

5. Dispositif selon la revendication 4, comportant une pompe (17), pour diriger l'effluent présent dans la cuve tampon (15) vers le deuxième filtre.

6. Dispositif selon la revendication 5, dans lequel la cuve comporte un détecteur de niveau (16) de l'effluent dans la cuve tampon (15), de telle sorte que la pompe (17) est activée lorsque la quantité d'effluent dans la cuve tampon dépasse une quantité prédéterminée (18).

7. Dispositif selon l'une quelconque des revendications précédentes, comportant un compresseur d'air (45), relié au deuxième filtre (20) et au troisième filtre (30), le compresseur d'air étant configuré pour injecter de l'air dans le deuxième filtre ou le troisième filtre.

8. Dispositif selon l'une quelconque des revendications précédentes, dans lequel une partie de la bande filtrante est configurée pour être déroulée par le moteur, de façon à être translatée face à l'admission, de telle sorte que la partie de la bande située à l'aplomb de l'admission est renouvelée.

9. Dispositif selon la revendication 8, dans lequel la bande filtrante est configurée pour être déroulée de façon séquentielle ou continue.

10. Dispositif selon l'une quelconque des revendications 8 à 9, comportant un capteur de niveau, destiné à détecter une élévation du niveau de l'effluent sur la bande, le capteur de niveau étant configuré pour déclencher un actionnement du moteur.

11. Dispositif selon l'une quelconque des revendications précédentes, dans lequel la granulométrie de la bande filtrante est comprise entre 35 µm et 40 µm.

12. Procédé de filtration d'un effluent liquide amianté, le procédé comportant une filtration de l'effluent liquide par un dispositif selon l'une quelconque des revendications 1 à 11, de façon à piéger des fibres d'amiante dans chaque filtre.

13. Procédé de filtration selon la revendication 12, dans lequel l'effluent amianté est issu d'une toiture et s'écoule, par écoulement gravitaire, à partir de cette dernière.

14. Procédé de filtration selon l'une quelconque des revendications 12 ou 13, dans lequel l'effluent filtré par le dispositif est rejeté dans un égout.
